# EUROPÄISCHE PATENTSCHRIFT

(11) **EP 0 655 187 B1**
(45) Veröffentlichungstag und Bekanntmachung des Hinweises auf die Patenterteilung: **01.12.1999**
(21) Anmeldenummer: 94115425.4
(22) Anmeldetag: 30.09.1994
(51) Int. Cl.: A01C 17/00

(54) **Schleuderstreuer**
Broadcaster
Epandeur centrifuge

(30) Priorität: 25.11.1993 DE 4340186; 03.03.1994 DE 4407009
(43) Veröffentlichungstag der Anmeldung: 31.05.1995
(73) Patentinhaber: Amazonen-Werke H. Dreyer GmbH & Co. KG, 49205 Hasbergen (DE)
(72) Erfinder: Dreyer, Heinz, Dipl.-Ing., D-49205 Hasbergen (DE); Lührmann, Johannes, D-49134 Wallenhorst (DE)

(56) Entgegenhaltungen:
- EP-A- 0 281 885
- EP-A- 0 292 874
- EP-A- 0 312 679
- EP-A- 0 497 168

## Beschreibung

Die Erfindung betrifft einen Schleuderstreuer gemäß des Oberbegriffes des Patentanspruches 1.

Ein derartiger Schleuderstreuer ist beispielsweise in der europäischen Offenlegungsschrift 02 81 886 beschrieben. Bei diesem Schleuderstreuer sind auf den Schleuderscheiben zwei Wurfelemente angeordnet. Jedes Wurfelement besteht aus zwei zueinander teleskopierbaren Teilen, die in unterschiedlichen Einstellungen zueinander zur Erreichung unterschiedlicher Längen des Wurfelementes versetzbar sind. Bei diesem Schleuderdüngerstreuer werden für jede Düngersorte und Arbeitsbreite entsprechend den Angaben in der Streutabelle die Wurfschaufeln entsprechend eingestellt.

Der Erfindung liegt die Aufgabe zugrunde, dieses Einstellen wesentlich zu vereinfachen.

Diese Aufgabe wird in erfindungsgemäßer Weise durch die kennzeichnende Maßnahme des Anspruches 1 gelöst. Um mit ein und derselben Wurfschaufel zwei Streuarbeitsbreitenbereiche einzustellen und mögliche Fehler bei der Einstellung weitestgehend auszuschließen, sind das äußere und das innere Teil zueinander in nur zwei Positionen zueinander versetzbar. Infolge dieser Maßnahme wird für einen ersten Streuarbeitsbreitenbereich das äußere Teil ganz eingeschoben, während für einen größeren Streuarbeitsbreitenbereich das äußere Teil ausgezogen wird.

Durch die EP-02 92 650 B1 ist ein Schleuderstreuer bekannt, bei dem zur Erreichung verschiedener Streuarbeitsbreitenbereiche die Schleuderscheiben mit Wurfschaufeln bestimmter Längen gegen Schleuderscheiben mit Wurfschaufeln anderer bestimmter Längen ausgetauscht werden. Somit müssen also für die einzelnen Streuarbeitsbereiche eigene Wurfschaufel- oder Schleuderscheibensätze vorhanden sein.

Nach der erfindungsgemäßen Lösung werden diese verschiedenen Wurfschaufel- oder Schleuderscheibensätze in überraschend einfacher Weise in einem teleskopierbaren Schaufelsatz integriert.

Eine vorteilhafte Ausbildung des Schleuderdüngerstreuers ergibt sich durch die Maßnahmen gemäß des Anspruches 3.

Um in einfacher Weise die Normal- und Spätdüngung durchführen zu können, ist vorgesehen, daß das äußere ausziehbare Teil eine untere Leitfläche aufweist, die in unterschiedliche Positionen einstellbar ist.

Eine äußerst einfache und gute Einstellung des Schleuderdüngerstreuers, um bei verschiedenen Arbeitsbreiten und verschiedenen Düngersorten eine gleichmäßige Düngerverteilung zu erreichen, zu gewährleisten, ist vorgesehen, daß die Wurfschaufeln in Scheibenebene winkelverschwenkbar und mit unterschiedlichen Winkel radial einstellbar auf den Schleuderscheiben angeordnet sind. In vorteilhafter Weise sind hierzu auf der Schleuderscheibe Markierungselemente angeordnet, anhand derer die Wurfschaufeln nach in Streutabellen enthaltenen Angaben eingestellt werden können.

Um in einfacher Weise das Grenzstreuen durchführen zu können, ist vorgesehen, daß das äußere ausziehbare Teil eine obere Leitfläche aufweist, die in unterschiedliche Positionen einstellbar ist, so daß in einer nach unten geneigten Position die Düngerpartikel zum Grenzstreuen weniger weit abgeworfen werden.

Um den Schleuderdüngerstreuer für weitere Einsatzbreitenbereiche oder auch auf andere Düngersorten, die ein extremes Streuverhalten haben, einfach einstellen zu können, ist vorgesehen, daß auf jeder Wurfschaufel zumindest zwei Wurfelemente angeordnet sind, daß wahlweise beide äußeren Teile der Wurfelemente ausziehbar sind, wobei das eine äußere Teil ineingeschobener und das andere äußere Teil in ausgezogener Position zum Einsatz bringbar ist. Hierdurch kann in einfacher Weise der Schleuderdüngerstreuer von dem Landwirt auf die vorgesehene Arbeitsbreite eingestellt werden. Hierdurch ergibt sich eine große Variation der Einstellmöglichkeiten der Wurfschaufellängen und Kombinationen.

Eine rationelle Fertigung der Wurfschaufeln ergibt sich dadurch, daß die inneren Teile der Wurfelemente gleich ausgebildet sind.

Eine narrensichere Einstellung der Wurfschaufeln anhand der in einer Streutabelle angegebene Einstellwerte wird dadurch erreicht, daß die einstellbaren Positionen für die äußeren Teile der Wurfelemente gegenüber den inneren Teilen der Wurfelemente mittels unterschiedlich ausgebildeter Markierung versehen sind.

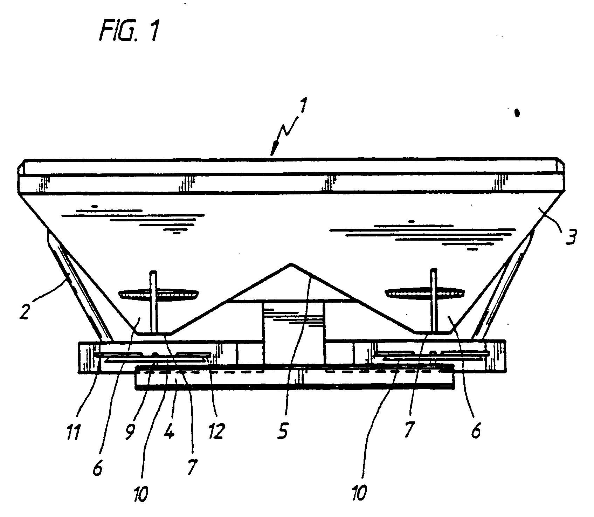

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Ansicht von hinten in Prinzipdarstellung,
- Fig. 2: die rechte Schleuderscheibe des Schleuderdüngerstreuers mit eingeschobenen Wurfschaufeln in der Draufsicht und in vergrößertem Maßstab sowie in Prinzipdarstellung,
- Fig. 3: die Schleuderscheibe nach Fig. 2, jedoch mit ausgezogenen Wurfschaufeln,
- Fig. 4: die Schleuderscheibe nach Fig. 2, wobei jedoch das äußere Teil der längeren Wurfschaufel ausgezogen ist und
- Fig. 5: die Schleuderscheibe nach Fig. 2, wobei jedoch das äußere Teil der kurzen Schaufel ausgezogen ist.

Der Schleuderdüngerstreuer 1 ist mit dem Rahmen 2 ausgestattet, an dem der Vorratsbehälter 3 und ein Winkelgetriebe 4 angebracht sind. Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

Unterhalb der Auslauföffnungen sind quer zur Fahrtrichtung 8 auf den Ausgangswellen 9 des Winkelgetriebes 4 die beiden Schleuderscheiben 10 nebeneinander beabstandet zueinander angeordnet. Auf diesen Schleuderscheiben 10 sind jeweils die kürzere Wurfschaufel 11 und die längere Wurfschaufel 12 befestigt. Die Befestigung der Schleuderscheiben 10 auf den Ausgangswellen 9 des Winkelgetriebes 4 ist derart ausgebildet, daß sich die Schleuderscheiben 10 vorzugsweise werkzeuglos auf diesen Ausgangswellen 9 montieren lassen, bzw. von den Ausgangswellen demontieren lassen. Den einzelnen Schleuderscheiben 10 wird das sich im Vorratsbehälter 3 des Schleuderdüngerstreuers befindliche Düngemittel in genau einstellbaren Mengen zugeführt. Die rotierenden Schleuderscheiben 10 verteilen mit den Wurfschaufeln 11 und 12 den auf die jeweilige Schleuderscheibe 10 auftreffenden Düngemittelstrom gleichmäßig über die genau einstellbare Arbeitsbreite des Düngerstreuers 1. Die Schleuderscheiben 10 rotieren entgegengesetzt zueinander.

Die Wurfschaufel 11 besteht aus dem inneren Teil 13 und dem äußeren Teil 14, während die Wurfschaufel 12 aus dem inneren Teil 15 und dem äußeren Teil 16 besteht. An den äußeren Teilen 14 und 16 ist jeweils die untere Leitfläche 17 schwenkbar angeordnet, so daß unterschiedliche Abflugrichtungen in horizontaler Ebene eingestellt werden können. In der für die Normaldüngung vorgesehenen Position befindet sich die Leitfläche 17 in Verlängerung der unteren Leitfläche 18 der äußeren Teile 14 und 16, während sie in der für die Spätdüngung vorgesehenen Position nach oben verschwenkt wird. Die inneren Teile 13 und 15 der Wurfschaufeln 11 und 12 sind mittels der Bolzen 19 in Scheibenebene winkelverschwenkbar angeordnet. Anhand des weiteren Bolzens 20, der jeweils in einem Langloch 21 der Schleuderscheibe 10 angeordnet ist, kann in die jeweilige Wurfschaufel 11 und 12 anhand der Markierungsskalen 22 in der entsprechenden Position festgesetzt werden.

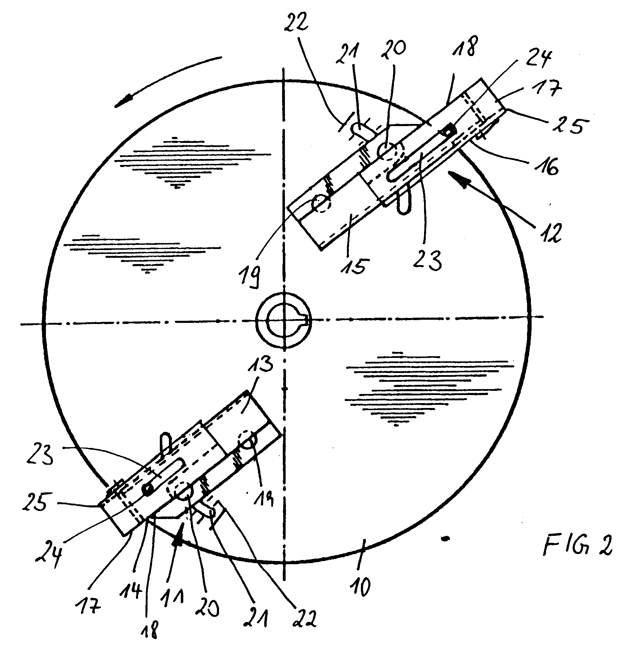

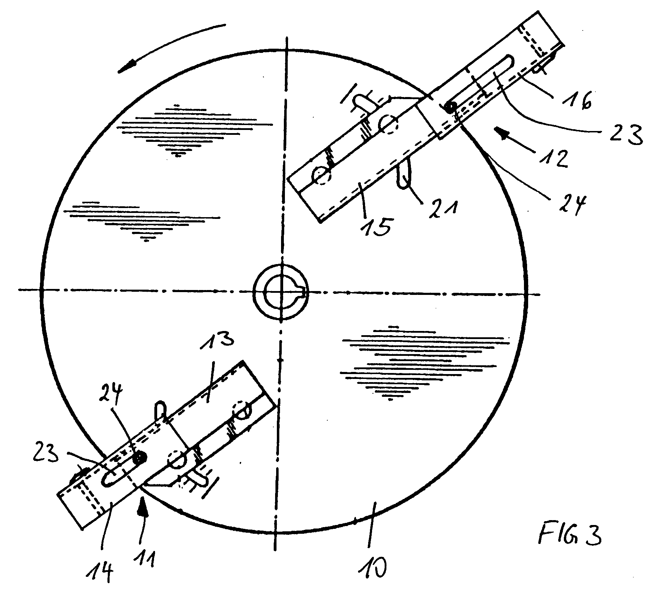

Die äußeren Teile 14 und 16 der Wurfschaufeln 11 und 12 können gegenüber den inneren Teilen 13 und 15 der Wurfschaufeln 11 und 12 teleskopartig verschoben werden. In der in Fig. 2 dargestellten Position sind die äußeren Teile 14 und 16 der Wurfschaufeln 11 und 12 in der eingeschobenen Position dargestellt. In dieser eingeschobenen Position läßt sich ein kleinerer Streuarbeitsbreitenbereich, beispielsweise 10 bis 18 m bestreuen. Die Einstellung der Wurfschaufeln 11 und 12 auf die jeweilige Düngersorte und die entsprechende Arbeitsbreite innerhalb des Streuarbeitsbreitenbereiches erfolgt über die Winkeleinstellung der Wurfschaufeln 11 und 12 in Scheibenebene anhand der Skalen 22. Wenn die Wurfschaufeln 11 und 12 in der in Fig. 3 dargestellten ausgezogenen Position festgesetzt sind, wird ein weiterer größerer Streuarbeitsbreitenbereich, beispielsweise 20 bis 28 m oder bei entsprechender Länge der Wurfschaufeln von beispielsweise 30 bis 36 m erreicht. Die ausgezogene bzw. eingezogene Position der äußeren Teile 14 und 16 der Wurfschaufeln 11 und 12 wird durch die Endanschläge der Langlöcher 23, die sich in den äußeren Teilen 14 und 16 der Wurfschaufeln 11 und 12 befinden bestimmt. Mittels der in die in den inneren Teil 13 und 15 angeordneten Langlöchern 23 eingreifenden Bolzen 24 und dem auf diesen angeordneten, jedoch der Übersichtlichkeit halber nicht dargestellten Festsetzelementes, beispielsweise in Form einer Flügelschraube werden die äußeren Teile 14 und 16 gegenüber den inneren Teilen 13 und 15 der Wurfschaufeln 11 und 12 festgesetzt und fixiert.

Wenn die Wurfschaufeln 12 und 12 in der eingezogenen Position für einen kleineren Streuarbeitsbreitenbereich festgesetzt sind, wie in Fig. 2 gezeigt, weisen die äußeren Abstreukanten 25 für die kleinere Streuarbeitsbreitenbereich eine Umfangsgeschwindigkeit von etwa 13 bis 26 m/sec, vorzugsweise ca. 17 m/sec für die kürzere Wurfschaufel 11 und 21 m/sec für die längere Wurfschaufel 12. Wenn die äußeren Teile 14 und 16 der Wurfschaufeln in der Fig. 3 dargestellten Position ausgezogen sind, um den größeren Streuarbeitsbreitenbereich von beispielsweise 20 bis 28 abzudecken, beträgt die Umfangsgeschwindigkeit an den Abstreukanten 25 der Wurfschaufeln etwa 18 bis 37 m/sec, vorzugsweise ca. 23 m/sec für die kürzere Wurfschaufel 11 und ca. 30 m/sec. für die längere Wurfschaufel 12.

Selbstverständlich ist es auch möglich, zusätzlich zu den zwei zueinander ausziehbaren Teilen 13 und 14 einerseits und 15 und 16 andererseits ein weiteres ausziehbares Teil zuzuordnen, um so einen weiteren Streuarbeitsbreitenbereich zu erreichen. Auch ist es möglich, die äußeren Teile 14 und 16 länger auszubilden um einen weiteren Streuarbeitsbreitenbereich zu erreichen, hierbei ist es jedoch erforderlich, daß mit geeigneten Mitteln dann eine weitere definierte Zwischenposition für das äußere ausziehbare Teil einrastbar oder festsetzbar vorgesehen ist.

Die inneren Teile 13 und 15 der Wurfschaufel 11 und 12 sind aus rationellen Fertigungsgründen gleich ausgebildet.

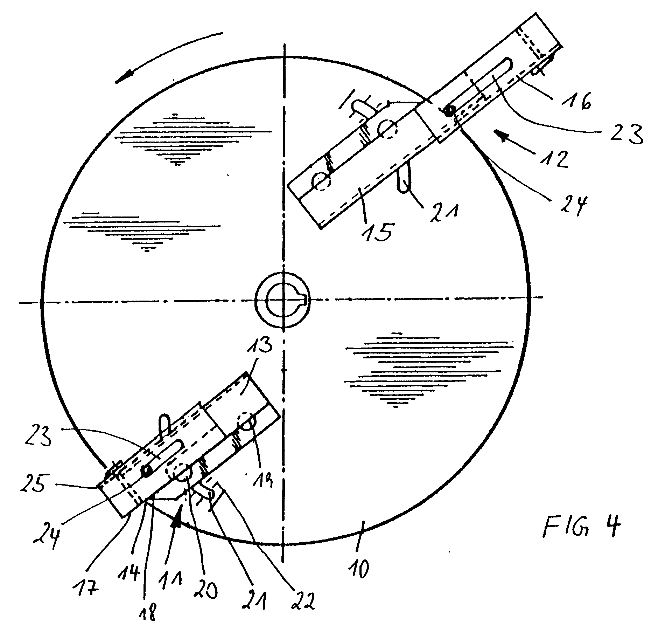

Wie die Fig. 4 zeigt, kann auch eine der beiden Wurfschaufeln 11 und 12 eingeschoben und die andere ausgezogen sein. Gemäß Fig. 4 ist das äußere Teil 14 der kürzeren Wurfschaufel 11 eingeschoben, während das äußere Teil 16 der längeren Wurfschaufel 12 ausgezogen ist. Hierdurch kann die Einstellung der Wurfschaufeln 11 und 12 an weitere Einsatzbedingungen angepaßt werden.

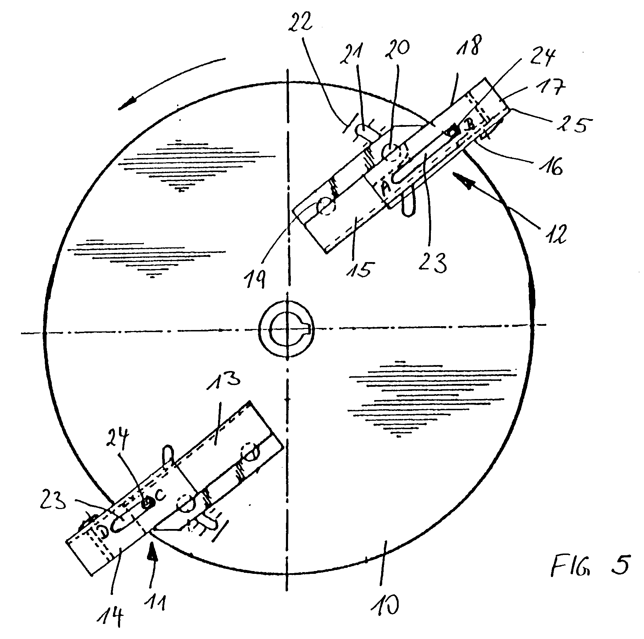

Bei dem Ausführungsbeispiel gemäß Fig. 5 ist das äußere Teil 14 der kürzeren Wurfschaufel 11 ausgezogen, während bei der längeren Wurfschaufel 12 das äußere Teil 16 eingeschoben ist.

An den Wurfschaufeln 11 und 12 können, wie in Fig. 5 dargestellt ist, mit unterschiedlich ausgebildete Markierungen versehen sein. Diese Markierungen sind mit A, B, C und D bezeichnet.

Mit in die Erfindung eingeschlossen sein soll, daß die äußeren Teile 14 und 16 aus einem härterem Material als die inneren Teile 13 und 15 hergestellt sind. Es ist auch möglich, auf der Innenseite des jeweiligen inneren Teiles eine eine glatte Oberfläche aufweisende Beschichtung, wie beispielsweise Teflon etc., aufzubringen.

## Patentansprüche

1. Schleuderstreuer zum Verteilen von Düngemitteln und dergleichen auf landwirtschaftlichen Flächen mit einem Vorratsbehälter und zumindest zwei unterhalb des Vorratsbehälters angeordneten rotierend angetriebenen Schleuderscheiben, auf denen zumindest ein aus zwei Teilen bestehendes Wurfelement angeordnet ist, wobei zumindest das äußere Teil des Wurfelementes in unterschiedliche Stellungen zur Erreichung unterschiedlicher Längen des Wurfelementes versetzbar und gegenüber dem inneren Teil des jeweiligen Wurfelementes längenverstellbar und in unterschiedlichen Positionen arretierbar ist und wobei das jeweilige aus einem inneren und einem äußeren Teil bestehende Wurfelement als teleskopartig ausziehbares und einschiebbares Wurfelement ausgebildet ist, wobei in der eingeschobenen Position des äußeren Teiles (14, 16) ein erster, kleinerer Streuarbeitsbreitenbereich und in der ausgezogenen Position des äußeren Teiles (1) ein zweiter, größerer Streuarbeitsbreitenbereich erhalten wird, dadurch gekennzeichnet, daß das innere (13, 15) und das äußere Teil (14, 16) in nur zwei Positionen zueinander versetzbar sind.

2. Schleuderdüngerstreuer nach Anspruch 1, dadurch gekennzeichnet, daß das äußere Teil (14, 16) für die ausgezogene Stellung derart ausgebildet ist, daß der aufrechte Wandabschnitt des äußeren Teiles auf gleicher Ebene wie der aufrechte Wandabschnittes des inneren Teiles liegt.

3. Schleuderdüngerstreuer nach einem oder mehreren der vorstehenden Ansprüche, dadurch gekennzeichnet, daß ein größerer und ein kleinerer Streuarbeitsbreitenbereich durch die Festsetzung des äußeren Teiles (14, 16) gegenüber dem inneren Teil (13, 15) der Wurfschaufel (11, 12) in zwei Positionen erreichbar ist, daß für den größeren Streuarbeitsbreitenbereich das äußere Teil (14, 16) der Wurfschaufeln (11, 12) jeweils in eine derartige Position versetzbar ist, daß die Umfangsgeschwindigkeit an den Abstreukanten (25) der Wurfschaufeln etwa 18 bis 37 m/sec, vorzugsweise ca. 23 m/sec für die kürzere Wurfschaufel (11) und ca. 30 m/sec für die längere Wurfschaufel (12) beträgt, und/oder daß für die kleineren Streubreiten die Umfangsgeschwindigkeit an den Abstreukanten (25) der Wurfschaufeln (11, 12) etwa 13 bis 26 m/sec, vorzugsweise ca. 17 m/sec für die kürzere (11) und ca. 21 m/sec für die längere Wurfschaufel (12) beträgt.

4. Schleuderdüngerstreuer nach einem oder mehreren der vorstehenden Ansprüche, dadurch gekennzeichnet, daß das äußere ausziehbare Teil (14, 16) eine untere Leitfläche (17) aufweist, die in unterschiedlichen Positionen einstellbar ist.

5. Schleuderdüngerstreuer nach einem oder mehreren der vorstehenden Ansprüche, dadurch gekennzeichnet, daß die Wurfschaufeln (11, 12) in Scheibenebene winkelverschwenkbar und mit unterschiedlichen Winkeln radial einstellbar auf den Schleuderscheiben (10) angeordnet sind.

6. Schleuderdüngerstreuer nach einem oder mehreren der vorstehenden Ansprüche, dadurch gekennzeichnet, daß das äußere ausziehbare Teil eine obere Leitfläche aufweist, die in unterschiedlichen Positionen einstellbar ist.

7. Schleuderstreuer nach Anspruch 1, dadurch gekennzeichnet, daß auf jeder Schleuderscheibe (10) zumindest zwei Wurfelemente (11,12) angeordnet sind, daß wahlweise beide äußeren Teile (14,16) der Wurfelemente (11,12) ausziehbar sind, wobei das eine äußere Teil (14,16) in eingeschobener und das andere äußere Teil (14,16) in ausgezogener Position zum Einsatz bringbar ist.

8. Schleuderdüngerstreuer, insbesondere nach Anspruch 1, dadurch gekennzeichnet, daß die inneren Teile der Wurfelemente (13,15) gleich ausgebildet sind.

## Claims

1. Centrifugal broadcaster for distributing fertilisers and the like over agricultural areas, having a hopper and at least two rotatably driven centrifugal discs disposed beneath the hopper, on which centrifugal discs at least one throwing element, comprising two parts, is disposed, at least the outer part of the throwing element being displaceable into various positions for achieving various lengths of the throwing element, said outer part being longitudinally adjustable relative to the inner part of the particular throwing element and being lockable in various positions, and the particular throwing element, which comprises an inner part and an outer part, being configured as a telescopically extendable and retractable throwing element, a first, smaller range of broadcasting width being achieved in the retracted position of the outer part (14, 16), and a second, larger range of broadcasting width being achieved in the extended position of the outer part (1), characterised in that the inner part (13, 15) and the outer part (14, 16) are displaceable relative to each other in only two positions.

2. Centrifugal fertiliser broadcaster according to claim 1, characterised in that the outer part (14, 16) is configured in such a way for the extended position that the upwardly extending wall portion of the outer part lies on the same plane as the upwardly extending wall portion of the inner part.

3. Centrifugal fertiliser broadcaster according to one or more of the preceding claims, characterised in that a larger range and a smaller range of broadcasting width are obtainable by securing the outer part (14, 16) of the throwing vane (11, 12) in two positions relative to the inner part (13, 15) of said vane, in that, for the larger range of broadcasting width, the outer part (14, 16) of the throwing vanes (11, 12) is respectively displaceable into such a position that the circumferential speed at the broadcasting edges (25) of the throwing vanes is substantially between 18 and 37 m/sec, preferably approx. 23 m/sec for the shorter throwing vane (11) and approx. 30 m/sec for the longer throwing vane (12), and/or in that, for the smaller broadcasting widths, the circumferential speed at the broadcasting edges (25) of the throwing vanes (11, 12) is substantially between 13 and 26 m/sec, preferably approx. 17 m/sec for the shorter throwing vane (11) and approx. 21 m/sec for the longer throwing vane (12).

4. Centrifugal fertiliser broadcaster according to one or more of the preceding claims, characterised in that the outer extendable part (14, 16) has a lower guide face (17) which can be sec in various positions.

5. Centrifugal fertiliser broadcaster according to one or more of the preceding claims, characterised in that the throwing vanes (11, 12) are disposed on the broadcasting discs (10) so as to be angularly pivotable in the disc plane and able to be set at different angles radially.

6. Centrifugal fertiliser broadcaster according to one or more of the preceding claims, characterised in that the outer extendable part has an upper guide face which can be set in various positions.

7. Centrifugal broadcaster according to claim 1, characterised in that, at least two throwing elements (11, 12) are disposed on each centrifugal disc (10), and in that the two outer parts (14, 16) of the throwing elements (11, 12) are selectively extendable, the one outer part (14, 16) being usable in the retracted position and the other outer part (14, 16) being usable in the extended position.

8. Centrifugal fertiliser broadcaster, more especially according to claim 1, characterised in that the inner parts of the throwing elements (13, 15) have an identical configuration.

## Revendications

1. Epandeur centrifuge pour distribuer des engrais ou produits analogues sur des surfaces agricoles comprenant un réservoir d'alimentation et au moins deux disques d'épandage entraînés en rotation et installés sous le réservoir d'alimentation, les disques d'épandage comportant au moins un élément éjecteur formé de deux parties, au moins la partie extérieure de l'élément éjecteur se réglant dans les positions différentes pour arriver à des longueurs différentes de l'élément d'éjection et se réglant longitudinalement par rapport à la partie intérieure de l'élément d'éjection respectif et se bloquant dans différentes positions ; chaque élément éjecteur se composant d'une partie intérieure et d'une partie extérieure en forme d'éléments éjecteurs rétractables et extensibles de manière télescopique, et en position rétractée pour la partie extérieure (14, 16), on traite une première petite plage de la largeur d'épandage et pour la partie extérieure (1), déployée, on a une seconde largeur d'épandage plus grande,
caractérisé en ce que
la partie intérieure (13, 15) et la partie extérieure (14, 16) ne peuvent se mettre que dans deux positions.

2. Epandeur centrifuge selon la revendication 1,
caractérisé en ce que
la partie extérieure (14, 16) est réalisée pour la position déployée pour que le segment de paroi vertical de la partie extérieure se trouve dans le même plan que le segment de paroi vertical de la partie intérieure.

3. Epandeur centrifuge selon l'une quelconque des revendications précédentes,
caractérisé en ce qu'
on a une plage de largeur d'épandage grande et une plage de largeur d'épandage petite en fixant la partie extérieure (14, 16) par rapport à la partie intérieure (13, 15) des palettes d'éjection (11, 12) dans deux positions, et pour la grande plage de largeur d'épandage, on met la partie extérieure (14, 16) des palettes d'éjection (11, 12) chaque fois dans une position telle que la vitesse périphérique des arêtes d'éjection (25) des palettes d'éjection soit de l'ordre de 18 à 37 m/sec et de préférence d'environ 23 m/sec pour la palette courte (11) et d'environ 30 m/sec pour la palette longue (12) et/ou pour des largeurs d'épandage plus réduites, la vitesse périphérique des arêtes d'épandage (25) des palettes d'éjection (11, 12) est seulement d'environ 13-26 m/sec de préférence d'environ 17 m/sec pour la palette courte (11) et d'environ 21 m/sec pour la palette longue (12).

4. Epandeur centrifuge selon l'une quelconque des revendications précédentes,
caractérisé en ce que
la partie extérieure extensible (14, 16) comporte une surface de guidage (17) inférieure qui se règle dans des positions différentes.

5. Epandeur centrifuge selon l'une quelconque des revendications précédentes,
caractérisé en ce que
les palettes d'éjection (11, 12) sont réglables angulairement dans le plan du disque et se règle suivant des angles différents par rapport à la direction radiale sur les disques d'épandage (10).

6. Epandeur centrifuge selon l'une quelconque des revendications précédentes,
caractérisé en ce que
la partie extérieure extensible présente une surface de guidage supérieure qui se règle dans différentes positions.

7. Epandeur centrifuge selon la revendication 1,
caractérisé en ce que
chaque disque d'épandage (10) comporte au moins deux éléments d'éjection (11, 12), les deux parties extérieures (14, 16) des éléments d'éjection (11, 12) sont sélectivement extensibles, l'une des parties extérieures (14, 16) se mettant en position rétractée et l'autre partie extérieure (14, 16) en position déployée pour leur utilisation.

8. Epandeur centrifuge notamment selon la revendication 1,
caractérisé en ce que
les parties intérieures des éléments d'éjection (13, 15) sont identiques.
